# EUROPÄISCHE PATENTANMELDUNG

(11) **EP 0 584 687 A2**
(43) Veröffentlichungstag der Anmeldung: **02.03.1994**
(21) Anmeldenummer: 93113088.4
(22) Anmeldetag: 16.08.1993
(51) Int. Cl.: H04Q 11/04, H04M 11/06, H04Q 3/00

(54) **Vorrichtung zum Uebertragen digitaler Daten zwischen zwei Teilnehmern**

(30) Priorität: 21.08.1992 CH 2603/92
(71) Anmelder: ASCOM TECH AG, CH-3018 Bern (CH)
(72) Erfinder: Rao, Sathyanarayana, Dr., CH-3108 Bern (CH); Schwerdtel, Eberhard, Dr., CH-3032 Hinterkappelen (CH)
(74) Vertreter: Schwerdtel, Eberhard, Dr.

(57) **Zusammenfassung**

Zum Übertragen digitaler Daten zwischen beliebigen Teilnehmern (TE1, TE2) eines N-ISDN-Netzes (15, 15.1, 15.2) ist dieses mit einem ATM-Netz (18) verkettet. Zwei Schnittstelleneinheiten (NA1, NA2) sind mit jeweils einem Knoten (22, 26) jedes der Netze über ankommende und abgehende Leitungen der jeweiligen Netz-Norm (23, 24; 27, 28) verbunden.

Die Schnittstelleneinheiten (NA1, NA2) sind ausgebildet auf der Seite des N-ISDN Netzes (15) zum Empfangen und Aussenden von zeitmultiplexierten Oktetts und auf der Seite des ATM-Netzes (18) zum Empfangen und Aussenden von Zellen. Die Zellen dienen als adressierte Träger für ein Vielzahl von Oktetts, die alle dieselbe Zielrichtung haben. Die Schnittstelleneinheiten (NA1, NA2) arbeiten blockierungs- und verlustfrei.

## Beschreibung

Die Erfindung betrifft eine Vorrichtung zum Übertragen digitaler Daten zwischen einem beliebigen ersten Teilnehmer und einem diesem jeweils zugeordneten zweiten Teilnehmer entsprechend dem Oberbegriff von Anspruch 1.

Unter einem im Oberbegriff von Anspruch 1 genannten N-ISDN-Netz (Narrowband Integrated Services Digital Network) versteht man ein verschiedene Dienste integrierendes, digitales Telekommunikations-Netz, bei dem die Übertragung bis zu den Benutzern, d.h. zu den Endgeräten, z.B. Telefongeraten, digital erfolgt. Die Bitrate eines Kanals beträgt 64 kBit/s, was der PCM-Norm (Pulse Code Modulation) entspricht (Abtastwerte von jeweils 8 Bit (Oktett) im Wiederholungstakt von 8 kHz). Zur ISDN-Technik gibt es umfangreiche Normenunterlagen und Literatur.

Eine um Zehnerpotenzen breitbandigere und anders organisierte, digitale Übertragung wird heute durch ATM-Netze (Asynchronous Transfer Mode) vorgesehen. Bei diesen handelt es sich um eigentliche Transportnetze, auf denen adressierte Zellen (cell) synchron verkehren, wobei diese Zellen in asynchroner Weise von den Teilnehmern jederzeit in das Netz eingeschoben bzw. aus diesem herausgenommen werden können. Eine Zelle besteht aus einem Kopfteil (header) von 5 Oktetts (40 Bit) und einem Informationsteil (payload) von 48 Oktetts zum Transport der Nutzinformation. Auch über die ATM-Netze gibt es Normenempfehlungen und Literatur.

Es ist nun wünschenswert und vorteilhaft, dass die genannten Netze miteinander verkettbar werden. Dies bedeutet, dass Schnittstelleneinheiten angegeben werden müssen, mit deren Hilfe es gelingt, Nutzinformation vom einen Netz in das andere Netz zu bringen und umgekehrt. Hieraus ergibt sich die Aufgabe der vorliegenden Erfindung, eine derartige Schnittstelleneinheit anzugeben, die im Aufbau einfach ist und mit deren Hilfe eine gute Auslastung der gegebenen Übertragungskapazitäten beider Netze möglich ist.

Die Lösung dieser Aufgabe ist durch die Merkmale der unabhängigen Ansprüche gegeben. Die abhängigen Ansprüche geben Ausgestaltungen der Erfindung an.

Im folgenden wird die Erfindung anhand von vier Figuren beispielsweise näher beschrieben.Es zeigen:
Fig. 1 - Prinzipielle Struktur von verketteten N-ISDN-und ATM-Netzen
Fig. 2 - Blockschaltbild einer ersten Schnittstelleneinheit zur Verbindung eines N-ISDN- und eines ATM-Netzes
Fig. 3 - Prinzipieller Aufbau einer Zelle des ATM-Netzes
Fig. 4 - Blockschaltbild einer zweiten Schnittstelleneinheit.

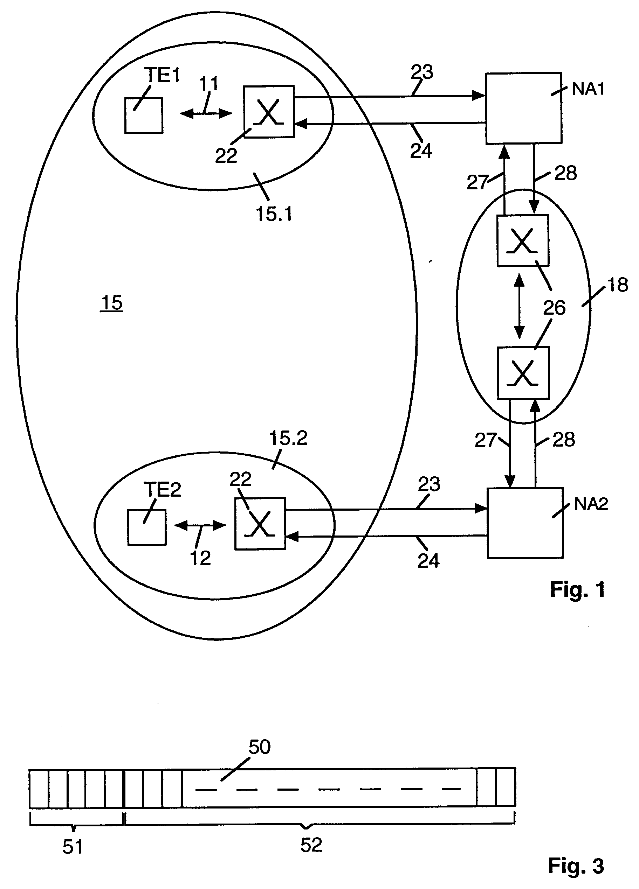

Fig. 1 zeigt die prinzipielle Struktur zweier unterschiedlicher, miteinander verketteter, digital arbeitender Netze zur Verbindung zweier Teilnehmer TE1 und TE2 (terminal equipment) zum Zwecke des Datenaustausches. Die digitalen Teilnehmer TE1, TE2 sind über digitale Teilnehmerleitungen 11, 12 mit zwei N-ISDN-Netzen 15.1, 15.2 verbunden, die entweder getrennte, z.B. räumlich getrennte Netze sein können oder Teilbereiche eines gemeinsamen, einzigen N-ISDN-Netzes 15. Die Netze 15 sind über Schnittstelleneinheiten NA1, NA2 (network adaptor) mit einem ATM-Netz 18 verbunden. Diese Schnittstelleneinheiten ermöglichen die Übergabe der vom einen Teilnehmer, (z.B. TE1) erzeugte Nutzinformation von Netz zu Netz (15.1, 18, 15.2) bis hin zum empfangenden, zweiten Teilnehmer TE2.

Jedes N-ISDN-Netz 15.1, 15.2 umfasst wenigstens einen ISDN-Knoten 22, der im wesentlichen als Vermittlungszentrale für eine Vielzahl angeschlossener Leitungen arbeitet. Dieser Knoten 22 ist allgemeinen mit entsprechenden anderen, nicht gezeigten Knoten 22 des N-ISDN-Netzes verbunden. Insgesammt sind wenigstens zwei ISDN-Knoten 22 erforderlich. Die genannte Vielzahl von Teilnehmerleitungen, die von jedem der ISDN-Knoten 22 ausgeht, ist nicht gezeigt.

In analoger Art wie das N-ISDN-Netz 15 weist das ATM-Netz 18 wenigstens zwei ATM-Knoten 26 auf. Diese Knoten 26 dienen der Vermittlung im ATM-Netz 18.

Die Schnittstelleneinheiten NA1, NA2 sind nun durch je eine ankommende 23 bzw. 27 und je eine abgehende Leitung 24 bzw. 28 der jeweiligen Netz-Norm und beliebiger Länge mit jeweils einem Knoten 22 bzw. 26 der beiden Netze 15 und 18 verbunden. Die Teilnehmer TE1, TE2 bilden als Endgeräte der beiden ISDN-Netze 15.1, 15.2 Quellen und/oder Senken für den Austausch bzw. die Übertragung digitaler Daten in z.B. beiden Richtungen. Diese Daten sind in Art der PCM-Norm als zeitmultiplexierte Oktetts (Blöcke von 8 Bit) organisiert. Diese Oktetts einer Quelle bilden - wie bereits gesagt - bei einem Repetitionstakt von 8 kHz zusammen jeweils einen Übertragungskanal von 64 kBit/s bzw. die zu übertragende Nutzinformation.

In den N-ISDN-Netzen 15.1, 15.2 sind die Knoten 22 untereinander in Art der PCM-Technik verbunden, das heisst durch Leitungen, auf denen zeitmultiplexiert 30(+2) Oktetts vorwiegend verschiedener Herkunft im Takt von 125 µs laufen. Dies entspricht 30(+2) 64-kBit/s-Kanälen. Bezogen auf die einzelnen Oktetts heisst es, dass diese auf den genannten Leitungen zeitmultiplexiert, d.h. zeitlagecodiert übertragen werden, also jedes Oktett in einem wohldefinierten, benennbaren Zeitschlitz. Die Leitungen 23 und 24 sind entsprechend ausgebildet.

Fig. 2 zeigt das Blockschaltbild einer ersten Schnittstelleneinheit NA. Diese Einheit umfasst zwei Codewandler 31, 32, einen Sortierer 33, mehrere Füllstationen 34.1 - 34.n, einen Multiplexer 39, eine Entleerstation 35 und eine steuernde Logik 36 mit wenigstens zwei zugeordneten Speichern 37, 38.

Der eine (erste) Codewandler 31 liegt zwischen der vom ISDN-Netz 15.1 ankommenden Leitung 23 und dem Sortierer 33 und dient dazu, die vom ISDN-Knoten 22 zeitmultiplexiert bzw. zeitlagecodiert und damit seriell ankommenden Oktetts mit Zieladressen zu versehen, d.h. in zielcodierte Oktetts umzuwandeln. Die hierzu notwendige Information liefert die Logik 36 zusammen mit dem Speicher 37. Als Ziel gilt dabei eine jeweilige Angabe, in welcher anderen Schnittstelleneinheit NA welcher Zeitschlitz der dortigen zum N-ISDN-Netz 15.2 abgehenden Leitung 24 mit dem jeweiligen Oktett zu belegen ist.

Der andere (zweite) Codewandler 32 ist invers orientiert und aufgebaut und wandelt ankommende, zielcodierte Oktetts in lagecodierte Oktetts um, d.h. sortiert die Oktetts in die jeweils zugeordneten Zeitschlitze der abgehenden Leitung 24 ein. Auch dieser Vorgang wird durch die Logik 36 und den Inhalt des Speichers 37 gesteuert.

Im Speicher 37 ist die Information enthalten, die laufend für das Umcodieren der Oktetts in den Codewandlern 31, 32 benötigt wird, d.h. Angaben über die hinzuzufügenden Zieladressen bzw. über die den Zieladressen zugeordneten Zeitschlitze der abgehenden Leitung 24. Diese Information unterliegt ständigem Wandel, so wie die Kommunikationsverbindungen wechseln. Sie wird jeweils durch einen Wählvorgang beim Aufbau einer Verbindung zwischen den Teilnehmern TN1, TN2 erzeugt und bis zum Ende dieser jeweiligen Verbindung im Speicher 37 der beiden beteiligten Schnittstelleneinheiten NA1 und NA2 gespeichert. Der Vorgang der Informationsbildung als solcher ist nicht Gegenstand der hier beschriebenen Erfindung. Es ist jedoch klar, dass der Speicher 37 ein echter Schreib/Lese-Speicher sein muss, dessen Inhalt ständig wechselt.

Der andere Speicher 38 enthält langfristig sich kaum ändernde Information über die Leitungen im gesamten ATM-Netz 18, d.h. Routing-Information über die jeweils günstigsten Verbindungen zwischen den jeweils betroffenen Schnittstelleneinheiten NA. Die Ziele im ATM-Netz 18 werden im folgenden auch mit 〈Destination〉 bezeichnet. Mit Hilfe der Routing-Information werden dem Sortierer 33 die jeweils günstigsten Verbindungswege zu den geforderten Destinationen angegeben.

Der Sortierer 33 hat die Aufgabe, die vom ersten codewandler 31 oder der Entleerstation 35 ankommenden zielcodierten Oktetts individuell jeweils einer der ihm parallel nachgeschalteten Füllstationen 34.1 - 34.n zuzuführen. Der Sortierer liest hierzu jeweils die Zieladresse der Oktetts, ermittelt hieraus und mit Hilfe der genannten Routing-Information die geeignetste der Füllstationen 34.1 - 34.n und liest anschliessend das jeweilige Oktett in diese jeweilige, ausgewählte Füllstation ein. Sofern die Zieladresse eines Oktetts nicht irgendeine andere sondern die gerade betrachtete Schnittstelleneinheit NA selbst als Ziel angibt, wird das Oktett statt dessen über die Leitung 42 dem zweiten Codewandler 32 zugeführt.Hiermit ist dieses jeweilige Oktett am Ende seines Weges durch das ATM-Netz 18 angekommen.

Alle Füllstationen 34.1 - 34.n sind gleich aufgebaut und dienen ständig wiederholt zum Zusammenstellen jeweils einer der genannten Zellen (cell) des ATM-Netzes 18. Fig. 3 zeigt hierzu den bekannten Aufbau einer solchen Zelle 50. Diese umfasst einen Kopfteil 51 (header) von z.B. fünf und einen Nutzteil 52 (payload) von achtundvierzig Oktett Länge. Die Füllstationen 34.1 - 34.n sind nun so eingerichtet, dass die vom Sortierer 33 ankommenden Oktetts samt ihrer Zieladressen jeweils seriell in den Nutzteil 52 einer bereitgestellten, mit Nutzinformation zu füllenden Zelle 50 einlaufen. Ist die jeweilige Zelle 50 vollständig fertig gestellt und der Nutzteil 52 mehr oder weniger gefüllt, dann wird diese Zelle 50 über den Multiplexer 39 und die abgehende Leitung 28 dem ATM-Knoten 26 und damit dem ATM-Netz 18 zugeführt. Hierbei ist noch wichtig, dass die Zelle in ihrem Kopfteil 51 als Zelle mit ISDN-Oktetts bzw. als NA-Zelle (Zelle, von einer Schnittstelleneinheit NA herkommend) gekennzeichnet ist. Weiter muss die Destination der Zelle exakt oder zumindest annähernd den Zielen der in ihr enthaltenen zielcodierten Oktetts entsprechen. Woher die Oktetts kommen, welches ihre Quellen sind bzw. welcher Teilnehmer TE sie ausgesandt hat, spielt dagegen keine Rolle. Im allgemeinen ist damit eine Vielzahl von Oktetts von völlig verschiedenen Teilnehmern TE im Nutzteil 52 einer Zelle 50 enthalten, wobei keine spezielle Reihenfolge oder Ordnung notwendig ist.

Die Entleerstation 35 ist zwischen der vom ATM-Netz 18 ankommenden Leitung 27 und dem Sortierer 33 angeordnet. Sie ist so ausgebildet, dass die vom ATM-Netz 18 ankommenden Zellen 50 gelöscht und der Inhalt des jeweiligen Nutzteils 52, d.h. die zielcodierten Oktetts, dem Sortierer 33 über die Leitung 41 seriell zugeführt werden.

Die bis hierher beschriebene Schnittstelleneinheit NA arbeitet wie folgt: Die von einem Teilnehmer, z.B. TE1 alle 125 µs ausgesandten Oktetts laufen durch das N-ISDN-Netz 15.1 und erreichen zeitmultiplixiert den ISDN-Knoten 22, der der Schnittstelleneinheit NA1 zugeordnet ist. Dieser Knoten 22 leitet die Oktetts blockade- und verzögerungsfrei sowie zeitmultiplexiert mit anderen Oktetts über die Leitung 23 zum ersten Codewandler 31 weiter. Der Codewandler 31 und die Logik 36 wissen aufgrund der vorausgegangenen Wählvorgänge (Verbindungsaufbau), mit welchen Zieladressen die ankommenden Oktetts jeweils zu versehen sind. Sie ergänzen nun jedes Oktett mit dessen zugeordneter Zielangabe und leiten die so gebildeten, zielcodierten Oktetts zum Sortierer 33 weiter. Der Sortierer liest die Zielangabe der seriell ankommenden Oktetts und wählt die zum Erreichen des jeweiligen Zieles geeignetste Destination aus. Die hierfür notwendige Netzinformation entnimmt er dem Speicher 38. Anschliessend leitet er das jeweilige Oktett der jeweils ausgewählten, zugeordneten Füllstation 34.1 bis 34.n zu. Die zielcodierten Oktetts laufen auf diese Weise in diesen parallel angeordneten Füllstationen in den Nutzteil 52 jeweils derjenigen wartenden Zellen 50 ein, die für die jeweils ausgewählte Destination bestimmt ist. Sobald eine der Zellen 50 die Kriterien für ihren Start erfüllt, wird der Füllvorgang abgebrochen und die Zelle läuft über den Multiplexer 39 und die abgehende Leitung 28 in den angeschlossenen ATM-Knoten 26 des ATM-Netzes 18 ein. Dieser Knoten 26 leitet die genannte jeweilige Zelle 50 nun weiter durch das ATM-Netz 18 in Richtung der in ihrem Kopfteil 51 angegebenen Destination. Sobald diese Destination erreicht ist, das heisst z.B. im gegebenen Beispiel die Schnittstelleneinheit NA2, dann erreicht die genannte Zelle 50 über die ankommende Leitung 27 die Entleerstation 35. Diese Entleerstation liquidiert nun die angekommene Zelle 50 und führt alle enthaltenen, zielcodierten Oktetts dem Sortierer 33 zu.

Der Sortierer 33 sortiert nunmehr diese Oktetts in der bereits beschriebenen Weise und füllt mit ihnen wieder weitere Zellen 50, sofern zum Erreichen des jeweiligen Zieles nochmals das ATM-Netz 18 benützt werden muss. Ist dies dagegen nicht der Fall, da die als Ziel genannte Schnittstelleneinheit NA2 erreicht wurde, dann werden diese jeweiligen zielcodierten Oktetts über die Leitung 42 dem zweiten Codewandler 32 zugeführt. Dieser Wandler 32 liest die jeweiligen Zieladressen und fügt jedes Oktett in den jeweils richtigen Zeitschlitz der zum N-ISDN-Netz 15.2 abgehenden Leitung 24 ein. Über diese Leitung 24 erreichen die nunmehr lagecodierten bzw. zeitmultiplexierten Oktetts den zugeordneten ISDN-Knoten 22, der sie durch das N-ISDN-Netz 15.2 zum jeweils gewünschten Teilnehmer TE2 weitervermittelt.

Auf die beschriebene Weise können das oder die N-ISDN-Netz(e) 15, 15.1 15.2 als z.B.relativ lokal begrenzte bzw. als regionale Netze und das ATM-Netz 18 als Fernnetz oder überregionales Netz optimal zusammenarbeiten. Jedes der Netze 15 bzw. 18 unterliegt vollständig seiner eigenen Norm und braucht keinerlei Anpassung. Insbesondere lässt sich die grosse Transportkapazität für Nutzinformation, die die Zellen 50 aufweisen, rationell ausnutzen. Die unterschiedlichen Netze 15 und 18 ergänzen sich auf diese Weise bestens. Die Schnittstelleneinheiten NA sind im Aufbau einfach und klar gegliedert. Sie lassen sich daher relativ preiswert herstellen und entsprechend den jeweiligen Bedürfnissen, z.B. bezüglich der Grösse einfach variieren.

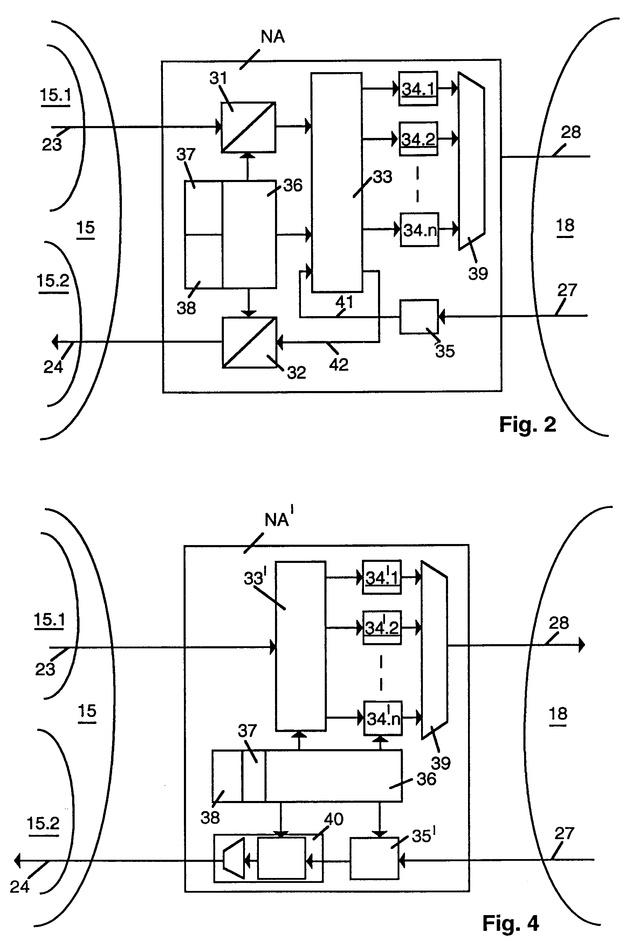

Fig. 4 zeigt das Blockschaltbild einer weiteren, zweiten schnittstelleneinheit NA'. Diese umfasst einen Sortierer 33', mehrere diesem nachgeschaltete Füllstationen 34'.1 - 34'.n, einen Multiplexer 39, eine Entleerstation 35', eine Multiplex-Einheit 40 und eine Logik 36 mit zugeordneten Speichern 37, 38.

Der Sortierer 33' ist an die vom N-ISDN-Netz 15 ankommende Leitung 23 angeschlossen. Er demultiplexiert die über diese Leitung 23 ankommenden Oktetts und sortiert sie in die nachgeschalteten Füllstationen 34'.1 - 34'.n ein. Dieses Sortieren erfolgt so, dass im Nutzteil 52 der zu füllenden Zellen 50 jeweils eine genau definierte Lage-Ordnung entsteht. Diese Ordnung bildet ein statisches Multiplex, das in der Entleerstation 35' wieder aufgelöst wird.

Die in den Füllstationen 34'.1 - 34'.2 gefüllten Zellen 50 tragen in ihrem Kopfteil 51 eine Destinationsangabe, die einer einzigen, für alle enthaltenen Oktetts einheitlichen Schnittstelleneinheit NA entspricht. Die Zellen 50 sind weiter gekennzeichnet als "Zelle mit ISDN-Oktetts" bzw. als von einer Schnittstelleneinheit NA ausgesandte Zellen, kurz als NA-Zellen.

Die der Entleerstation 35' nachgeschaltete Multiplex-Einheit 40 multiplexiert die von der Entleerstation 35' entsprechend dem Multiplex im Nutzteil 52 der Zellen 50 geordnet ankommenden Oktetts auf die zum N-ISDN-Netz 15 abgehende Leitung 24. Die Multiplex-Einheit 40 entspricht damit in der Funktion einem wohlbekannten 〈Time Interchange Circuit〉 eines PCM-Netzes. Die Logik 36 schliesslich steuert die beschriebenen Einheiten 33', 34', 35', 40, wobei die notwendige Information in Speichern 37, 38 enthalten ist.

Die zweite Schnittstelleneinheit NA' arbeitet ähnlich wie die anhand von Fig. 2 beschriebene erste schnittstelleneinheit NA. Die über die Leitung 23 vom N-ISDN-Netz 15.1 zeitmultiplexiert ankommenden Oktetts werden vom Sortierer 33' entsprechend ihren jeweiligen Zielrichtungen an die verschiedenen Füllstationen 34'.1 - 34'.n weitergeleitet. Diese Füllstationen lesen die Oktetts in den Nutzteil 52 einer jeweiligen, im Aufbau befindlichen Zelle 50 ein, wobei im Sinne eines Multiplex eine vorgegebene, genaue Ordnung bezüglich der zu besetzenden Stellen bzw. Plätze eingehalten wird. Die jeweils fertiggestellten Zellen 50 laufen über den Multiplexer 39 und die abgehende Leitung 28 in das ATM-Netz 18 ein.

Die über die Leitung 27 vom ATM-Netz 18 ankommenden Zellen 50 erreichen die Entleerstation 35'. Die in ihrem Nutzteil 52 enthaltenen Oktetts werden unter Beachtung ihrer Plätze ausgelesen und der Multiplex-Einheit 40 zugeführt. Diese Einheit zeitmultiplexiert die Oktetts in die Zeitschlitze der zum N-ISDN-Netz 15 abgehenden Leitung 24. Alle diese Vorgänge werden durch die Logik 36 gesteuert.

Sowohl bei der ersten Schnittstelleneinheit NA entsprechend Fig. 2 als auch bei der zweiten Schnittstelleneinheit NA' entsprechend Fig. 4 wird der Nutzteil 52 der verwendeten Zellen 50 im allgemeinen jeweils mit einer Vielzahl von Oktetts gefüllt, die allgemein von unterschiedlichen Quellen bzw. Teilnehmern TE herrühren. Bei der ersten Einheit NA ist den Oktetts jeweils eine Adresse beigegeben, aufgrund derer im ATM-Netz 18 auf eine besondere Ordnung der Oktetts verzichtet werden kann. Bei der zweiten Einheit NA' dagegen steckt die Zielinformation der Oktetts in der Platzwahl innerhalb des Nutzteils 52 der Zellen 50, weshalb eine jeweils genau vorgegebene Positionierung in den Zellen 50 und beim Auslesen aus diesen eingehalten werden muss.

Die bei der ersten Schnittstelleneinheit NA benötigte und im Speicher 37 gespeicherte Information besteht im wesentlichen aus einer Liste der Zeitschlitze der ankommenden Multiplex-Leitung 23, wobei jedem Zeitschlitz eine jeweilige Adresse zugeordnet ist, sofern der zeitschlitz nicht leer ist bzw. kein Nutzinformations-Oktett enthält. Die Information besteht für die umgekehrte Richtung in einer weiteren Liste der Zeitschlitze der abgehenden Multiplex-Leitung 24, welchen Zeitschlitzen in analoger Art jeweilige Adressen zugeordnet sind. Aufgrund der Adressen der Oktetts können diese problemlos im ATM-Netz 18 von einer Zelle 50 in eine jeweils andere Zelle 50 umgepackt werden, welche jeweiligen anderen Zellen nach Erreichen der Destination der ersten Zelle den Weitertransport der Oktetts besorgen. Dies kann als "Umsteigen" von Zelle zu Zelle angesehen werden. Es macht den Transport der Oktetts im ATM-Netz 18 sehr flexibel, da die notwendige Information zur Steuerung des Vorgangs in den Zielcodes der Oktetts enthalten ist (und nirgends sonst gespeichert sein muss).

Die bei der zweiten Schnittstelleneinheit NA' benötigte Information für das ordnungsgemässe Füllen der Zellen 50 besteht im wesentlichen ebenfalls aus einer Liste der Zeitschlitze der ankommenden Multiplex-Leitung 23, wobei jedoch jedem Zeitschlitz jeweils ein spezieller Platz im Nutzteil 52 einer bestimmten Zelle 50 zugeordnet ist. Mit Vorteil können diese Plätze in der Reihenfolge exakt den Zeitschlitzen der abgehenden Leitung 24 entsprechen, in die die Oktetts durch die Ziel-Schnittstelleneinheit NA eingeordnet werden müssen. In diesem Fall reduziert sich die Aufgabe der Multiplex-Einheit 40 auf ein Synchronisieren zwischen den mittels einer Zelle 50 ankommenden Oktetts und den Zeitschlitzen der abgehenden Leitung 24.

Da die Zeitschlitze der Multiplex-Leitung 23 sich im Takt von 125 µs wiederholen, müssen die Zellen 50 bevorzugt im gleichen Takt entsprechend wechseln. Die Information für die Richtung vom ATM-Netz 18 zum N-ISDN-Netz 15.2 besteht analog aus einer Liste der Zeitschlitze der abgehenden Multiplex-Leitung 24, wobei die Zuordnung zwischen dem jeweiligen Platz im Nutzteil einer bestimmten, angekommenen Zelle 50 und den genannten Zeitschlitzen angegeben wird.

Im Fall einer Anordnung entsprechend Fig. 4 erfordert der Transport der in den Zellen 50 "im statischen Multiplex" enthaltenen Oktetts nur die Kapazität zur Übertragung der reinen Oktetts, da keine expliziten Adressen mitübertragen werden müssen. Dies ist ein Vorteil gegenüber einer Anordnung entsprechend Fig. 2, da hier explizit die jeweiligen Adressen bzw. Zielcodes der Oktetts mitübertragen werden müssen. Als Nachteil ist dagegen anzusehen, dass eine Synchronisation zwischen dem Zeitmultiplex der Leitungen 23, 24 und den abgehenden bzw. ankommenden Zellen 50 erforderlich ist. Ein "Umsteigen" von Oktetts von Zelle zu Zelle im ATM-Netz 18 erfordert in diesem Fall entsprechende Information am jeweiligen Umsteige-Knoten 26.

Im folgenden werden eine Reihe weiterer Varianten genannt:
· Die Logik 36 und die zugeordneten Steuerprogramme sind beliebig gestaltbar. Der Speicher 37 für die jeweiligen Verbindungsinformationen muss ein Schreib/Lese-Speicher sein (RAM: Random Access Memory). Der Speicher 38 für die Routing- bzw. Netzinformation kann dagegen als reiner Lesespeicher (ROM: Read Only Memory) konzipiert sein, wenn die Konfiguration des ATM-Netzes 18 nur sehr selten ändert.
· Die Sortierer 33 und 33' können entweder als seriell arbeitende Einheiten, als parallel arbeitende oder als gemischt seriell/parallel arbeitende Einheiten konzipiert sein. Die Sortierer können weiter eigenständig eine Logik umfassen oder - wie beschrieben - mit der allgemeinen Logik 36 zusammenwirken. Die Sortierer können weiter ein- oder mehrstufig ausgebildet sein und mehr oder weniger grosse Pufferspeicher umfassen, um wechselnder Eingangsbelastung blockierungs- und/oder verlustfrei zu genügen.
· Statt über den Multiplexer 39 und eine einzige Leitung 28 können die Ausgänge der Füllstationen 34.1 - 34.n oder 34'.1 - 34'.n auch über individuell zugeordnete, zum ATM-Netz 18 führende Leitungen mit diesem Netz verbunden sein.
· Es ist weiter möglich, die Codewandler 31, 32, den Multiplexer 39 und die Entleerstation 35 mehrfach auszuführen und statt der einzelnen Leitungen 23, 24, 27, 28 mehrere derartige Leitungen vorzusehen, die entweder an einen jeweils einzigen oder auch an unterschiedliche Knoten 22 bzw. 26 der Netze 15 bzw. 18 angeschlossen sind.
· Als Destinationen für die NA-Zellen 50 im ATM-Netz 18 können zum einen ausschliesslich alle jeweils anderen Schnittstelleneinheiten NA zugelassen sein. Dies ist von der Konzeption her einfach, bedingt aber bei einem grossen ATM-Netz 18 eine entsprechend grosse Anzahl von Füllstationen 34, 34' pro Schnittstelleneinheit. Zum zweiten können als Destinationen alle diejenigen ATM-Knoten 26 zugelassen sein, die mit dem jeweiligen Knoten 26 unmittelbar verbunden sind. In diesem Fall muss dann von ATM-Knoten zu ATM-Knoten ein erneutes Zusammenstellen von Zellen 50 erfolgen. Es kann aber zum dritten grundsätzlich jeder beliebig auswählbare ATM-Knoten in die Liste der jeweiligen Destinationen aufgenommen werden, was das vorgehend genannte, ständig erneute Zusammenstellen von AN-Zellen 50 ganz oder doch wesentlich vermindert.
· Die Kriterien dafür, wann eine Zelle 50 absendebereit ist, lassen sich für die Schnittstelleneinheiten NA entsprechend Fig. 2 fast beliebig wählen. Für die Einheiten NA' entsprechend Fig. 4 muss das Absenden dagegen mit dem Takt der Leitungen 23, 24 synchronisiert sein.
· Da aufgrund verschiedener, möglicher Laufwege im ATM-Netz 18 und durch Sortierverzögerungen die im ersten Codewandler 31 gegebene Reihenfolge zusammengehöriger, zielcodierter Oktetts bei der Übertragung nicht unbedingt erhalten bleibt, kann es vorteilhaft sein, jedem Oktett eine Laufnummer zuzuordnen. Der jeweilige zweite Codewandler 32 kann dann ausgebildet sein zum Wiederherstellen der ursprünglichen Ordnung, indem er die Oktetts puffert und nach ihrer Laufnummer ordnet.
· Es ist schliesslich noch zu erwähnen, dass ergänzend zu der beschriebenen Verkettung zwischen z.B. zwei getrennten N-ISDN-Netzen 15.1, 15.2 und einem ATM-Netz 18 natürlich auch weitere Verkettungen über ein weiteres ATM-Netz möglich sind.

## Patentansprüche

1. Vorrichtung zum Übertragen digitaler Daten zwischen einem beliebigen ersten Teilnehmer (TE1) und einem diesem jeweils zugeordneten zweiten Teilnehmer (TE2),
wobei die Teilnehmer (TE1, TE2) einem einzigen, gemeinsamen (15) oder zwei voneinander unabhängigen N-ISDN-Netzen (15.1, 15.2) angehören,
dadurch gekennzeichnet,
- dass das (15) oder die N-ISDN-Netz(e) (15.1, 15.2) insgesamt wenigstens zwei ISDN-Knoten (22) aufweisen,
- dass ein ATM-Netz (18) mit wenigstens zwei ATM-Knoten (26) vorgesehen ist,
- dass wenigstens zwei Schnittstelleneinheiten (NA1, NA2) vorgesehen sind, an die jeweils wenigstens ein ISDN-Knoten (22) und wenigstens ein ATM-Knoten (26) über ankommende und abgehende Leitungen (23, 24; 27, 28) der jeweiligen zugeordneten Netz-Norm angeschlossen sind, und
- dass die Schnittstelleneinheiten (NA1, NA2) blockierungsfrei ausgebildet sind
zum Empfangen und zum Aussenden von zeitmultiplexierten Oktetts von den vom jeweiligen N-ISDN-Netz (15, 15.1) ankommenden bzw.auf die zum jeweiligen N-ISDN-Netz (15, 15.2) abgehenden Leitungen (24, 25),
zum Einfüllen der empfangenen Oktetts zu mehreren in den Nutzteil (52) von Zellen (50),
zum Aussenden der genannten Zellen (50) auf die zum ATM-Netz (18) abgehenden Leitungen (27), wobei die Zellen (50) als Träger von Oktetts eines N-ISDN-Netzes speziell gekennzeichnet sind,
und zum Empfangen von Zellen (50) und zum Entleeren der Oktetts aus dem Nutzteil (52) der empfangenen Zellen (50).

2. Vorrichtung nach Anspruch 1,
gekennzeichnet in jeder schnittstelleneinheit (NA, NA1, NA2)
- durch einen ersten Codewandler (31), der an eine vom N-ISDN-Netz (15, 15.1) ankommende Leitung (23) angeschlossen ist, und der ausgebildet ist zum Umwandeln jedes zeitmultiplixiert ankommenden Oktetts in ein eineindeutig zugeordnetes, zielcodiertes Oktett,
- durch einen Sortierer (33), der dem ersten Codewandler (31) nachgeschaltet ist, und der ausgebildet ist zum Ausgeben jedes zielcodierten Oktetts auf einen von mehreren Ausgängen, welche Ausgänge jeweils einer den Zielcodes der jeweiligen Oktetts zugeordneten Destination entsprechen,
- durch eine Mehrzahl von Füllstationen (34.1-34.n), die den Ausgängen des Sortierers (33) in paralleler Art nachgeschaltet sind, und die ausgebildet sind zum Einfüllen der sortierten, zielcodierten Oktetts in den Nutzteil (52) von jeweiligen, zu erstellenden Zellen (50), die jeweils für diejenige Destination bestimmt sind, die dem jeweiligen Ausgang des Sortierers (33) entspricht,
- durch eine Entleerstation (35), die an eine vom ATM-Netz (18) ankommende Leitung (27) angeschlossen ist, und die ausgebildet ist zum Entleeren der jeweiligen Oktetts aus dem Nutzteil (52) der ankommenden Zellen (50) und zum Einlesen dieser Oktetts in den Sortierer (33),
- durch einen zweiten Codewandler (32), der dem Sortierer (33) nachgeschaltet ist, und der ausgebildet ist zum Umwandeln ankommender, zielcodierter Oktetts in eineindeutig zugeordnete, zeitmultiplexiert zu übertragende Oktetts des N-ISDN-Netzes (15, 15.2), und
- durch wenigstens eine Logik (36) mit zugeordneten Speichern (37, 38), die ausgebildet ist zum Steuern des ersten (31) und zweiten Codewandlers (32) und des Sortierers (33) (Fig. 2).

3. Vorrichtung nach Anspruch 1,
gekennzeichnet in jeder schnittstelleneinheit (NA')
- durch einen Sortierer (33'), der an eine vom N-ISDN-Netz (15, 15.1) ankommende Leitung (23) angeschlossen ist, und der ausgebildet ist zum Ausgeben jedes zeitmultiplixiert ankommenden Oktetts auf einen von mehreren Ausgängen, welche Ausgänge jeweils einer jeweiligen, zugeordneten Destination entsprechen,
- durch eine Mehrzahl von Füllstationen (34'.1-34'.n), die den Ausgängen des Sortierers (33') in paralleler Art nachgeschaltet sind, und die ausgebildet sind zum Einfüllen der sortierten Oktetts in den Nutzteil (52) von jeweiligen, zu erstellenden Zellen (50), die jeweils für diejenige Destination bestimmt sind, die dem jeweiligen Ausgang des Sortierers (33') entspricht, wobei die Oktetts in den Nutzteilen (52) der Zellen (50) entsprechend einer vorbestimmten Multiplex-Ordnung eingeordnet sind,
- durch eine Entleerstation (35'), die an eine vom ATM-Netz (18) ankommende Leitung (27) angeschlossen ist, und die ausgebildet ist zum Entleeren der jeweiligen Oktetts aus den Nutzteilen (52) der ankommenden Zellen (50),
- durch eine Multiplex-Einheit (40), die der Entleerstation (35') nachgeschaltet ist, und die ausgebildet ist zum Aussenden der ankommenden Oktetts in jeweils eineindeutig zugeordnete Zeitschlitze einer zum jeweiligen N-ISDN-Netz (15, 15.2) abgehenden Leitung (24), und
- durch wenigstens eine Logik (36) mit zugeordneten Speichern (37, 38), die ausgebildet ist zum Steuern des Sortierers (33') und der Multiplex-Einheit (40) (Fig. 4).

4. Vorrichtung nach Anspruch 2 oder 3,
dadurch gekennzeichnet,
dass zwischen den Füllstationen (34.1-34.n; 34'.1-34'.n) und einer einzigen zum ATM-Netz (18) abgehenden Leitung (28) ein Multiplexer (39) angeordnet ist.

5. Vorrichtung nach Anspruch 2 oder 3,
dadurch gekennzeichnet,
dass jede Füllstation (34.1-34.n, 34'.1-34'.n) an eine individuell zugeordnete, zum ATM-Netz (18) abgehenden Leitung angeschlossen ist.
